Europäisches Patentamt

(19) European Patent Office

Office européen des brevets

(11) Veröffentlichungsnummer: **0 197 134**
**B1**

(12) **EUROPÄISCHE PATENTSCHRIFT**

(45) Veröffentlichungstag der Patentschrifft:
17.01.90

(21) Anmeldenummer: 85905307.6

(22) Anmeldetag: 14.10.85

(86) Internationale Anmeldenummer:
PCT/AT 85/00040

(87) Internationale Veröffentlichungsnummer:
WO 86/02346 (24.04.86 Gazette 86/09)

(51) Int. Cl.⁴: **C 04 B 28/34, C 04 B 41/50,**
**C 04 B 41/52 //**
**(C04B28/34, 14:20)**

(54) PLATTE AUS ANORGANISCHEM MATERIAL, VERFAHREN ZU IHRER HERSTELLUNG SOWIE EINE VERWENDUNG DIESER PLATTE.

(30) Priorität: 12.10.84 AT 3250/84

(43) Veröffentlichungstag der Anmeldung:
15.10.86 Patentblatt 86/42

(45) Bekanntmachung des Hinweises auf die Patenterteilung:
17.01.90 Patentblatt 90/03

(84) Bennante Vertragsstaaten:
AT BE CH DE FR GB IT LI NL SE

(56) Entgegenhaltungen:
FR-A-2 336 524
FR-A-2 384 601
US-A-2 919 202
US-A-4 122 231
US-A-4 432 799

Sprechsaal, volume 113, no. 8, August 1980, Coburg (DE) D. Stefanow . "Keramische Glasuren-Stand des Wissens in Osteuropa", part II, pages 591-597,

(73) Patentinhaber: ISOVOLTA sterreichische Isolierstoffwerke Aktiengesellschaft
Industriezentrum-Süd
A-2351 Wiener Neudorf (AT)
Patentinhaber: KLINGENBERG DEKORAMIK GMBH
Trennfurterstrasse 2
D-8763 Klingenberg/Main (DE)

(72) Erfinder: RUTHSATZ, Albert
Albertwerke-Siedlung 15
D-8763 Klingenberg/Main (DE)
Erfinder: KUPFER, Herbert
Erlaufstrasse 10/3
A-2344 Maria Enzersdorf (AT)
Erfinder: WEHRMANN, Felix
Obkirchergasse 41/6
A-1190 Wien (AT)

(74) Vertreter: Stampfer, Heinz
ISOVOLTA sterreichische Isolierstoffwerke AG
Industriezentrum-Süd
A-2351 Wiener Neudorf (AT)

## Beschreibung

## Platte aus anorganischem Material Verfahren zu ihrer Herstellung sowie eine Verwendung dieser Platte

Die Erfindung betrifft eine Platte aus anorganischem Material, die eine mechanisch tragende Basisschicht aufweist oder aus einer solchen besteht, welche Basisschicht ein aus einem Gemisch auf der Grundlage von exfoliertem Vermiculit und Bindemittel verdichteter Körper ist, der gegebenenfalls an einer Seite der Basisschicht eine durch einen Brennvorgang hergestellte keramische Deckschicht aufweist. Die Erfindung betrifft ferner ein vorteilhaftes Verfahren zur Herstellung der erfindungsgemäßen Platte sowie eine vorteilhafte Verwendung der Platte.

Eine Platte der obengenannten Art ist aus der US-A-4 122 231 bekannt. Sie dient als wasserbeständige, feuchtigkeitsabsorbierende Bauplatte, bei deren Herstellung ein spezielles Bindemittel auf Silikat- und Phosphatbasis eingesetzt wird, welches für die Eigenschaften der Bauplatte maßgeblich ist. Diese bekannte Bauplatte ist ferner mit einer keramischen Oberflächenglasur versehen, die durch einen Brennvorgang, dessen Dauer im Bereich zwischen 2,5 bis 3 min liegt, aufgebracht wird.

Im Rahmen der erfinderischen Tätigkeit wurde nun festgestellt, daß bei einer Platte, die durch Verpressen eines Gemenges aus exfoliertem Vermiculit und einem Bindemittel hergestellt wurde, durch eine genügend lange Wärmebehandlung bei einer genügend hohen Temperatur eine Strukturumwandlung des Vermiculitgefüges eintritt, welche sich in einer Erhöhung der Festigkeit und der Oberflächenhärte des Vermiculitmaterials auswirkt.

Die Erfindung, wie sie in den Ansprüchen gekennzeichnet ist, löst zunächst die Aufgabe, eine Platte der eingangs genannten Art, bei deren Herstellung die erwähnte Strukturumwandlung des Vermiculitgefüges ausgenutzt wird, anzugeben sowie vorteilhafte Verfahren zur Herstellung der erfindungsgemäßen Platte und eine vorteilhafte Verwendung einer solchen Platte.

Gemäß Anspruch 1 ist die erfindungsgemäße Platte dadurch gekennzeichnet, daß bei einer Platte der eingangs genannten Art die Basisschicht ein zum Zwecke einer Strukturumwandlung des Vermiculitgefüges bei Temperaturen von höher als 800°C, vorzugsweise von höher als 900°C, länger als 3 min wärmebehandelter Körper ist.

Die Technologie der Herstellung von Platten durch Verpressen eines Gemenges aus exfoliertem Vermiculit und einem Bindemittel an sich ist allgemein bekannt, insbesondere ist sie z. B. in der Beschreibungseinleitung der DE-OS-2 810 132 beschrieben.

Die Erfindung wird nachstehend anhand der Figuren näher erläutert:

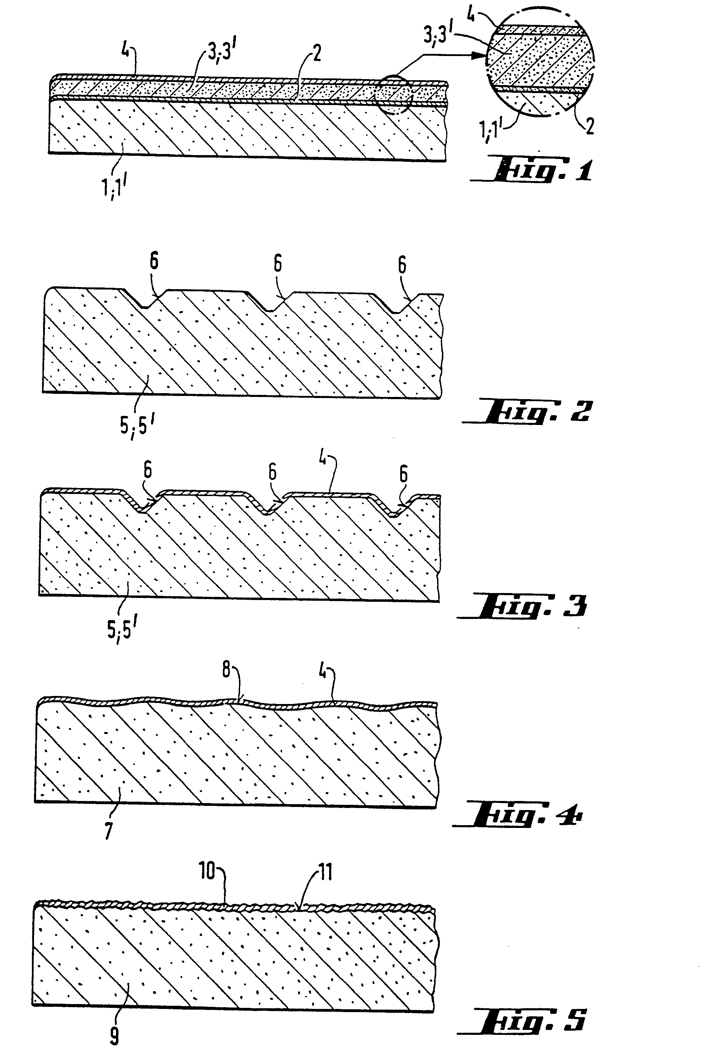

Anhand von Fig. 1 sei zunächst eine erste Verfahrensvariante zur Herstellung einer Verbundplatte beschrieben, die vorteilhaft als Bodenfliese verwendet werden kann. Fig. 1 zeigt diese Fliese in einer Teildarstellung in Schnitt.

Bei dieser Verfahrensvariante geht man von einer später die Basisschicht (1') bildenden Trägerplatte aus, zu deren Herstellung man ein Granulat aus exfoliiertem Vermiculit, das aus einem Rohvermiculitgranulat durch kurzzeitige Erhitzung in einem Blähofen gewonnen wurde, mit der wässerigen Lösung eines Bindemittels auf Basis eines Aluminiummonophosphats mischt, so daß die Granulatpartikel gleichmäßig mit dem Bindemittel beaufschlagt werden. Aus dem so beleimten Granulat, das z. B. einen Bindemittelanteil von 15 Gew.-% atro enthält und weiter rieselfähig und nicht klebrig ist, wird nun eine Schüttung gleichmäßiger Dicke hergestellt, die in einer geeigneten unbeheizten Vorpreßeinrichtung bei einem Druck von 50 bis 70 N/cm$^2$ auf 50 % seines ursprünglichen Schüttvolumens zu einem gut transportierbaren Preßkuchen komprimiert wird. Dieser Preßkuchen wird danach in einer mit einer Hochfrequenzkondensatorfeldbeheizung für das Preßgut ausgestatteten Presse bei einem Druck von 80 bis 100 N/cm$^2$ bei einer Preßguttemperatur von etwa 150 bis 180°C während einer Preßzeit von 5 bis 10 min auf ein Raumgewicht von 900 kg/m$^3$ verpreßt, der Presse entnommen, auf ein Dickenmaß von z. B. 10 mm geschliffen und schließlich auf das gewünschte Maß in Trägerplattenstücke 1 zugeschnitten.

Diese Trägerplattenstücke 1 werden nun an einer Seite mit einer Zwischenschicht 2 aus einer Glasmehlfritte in einer Dicke von etwa 0,1 mm versehen. Dies erfolgt vorzugsweise wie üblich durch Aufspritzen der im Wasser aufgeschlämmten Glasmehlfritte und durch ein nachfolgendes Trocknen.

Auf diese mit Zwichenschichten 2 versehenen Trägerplattenstücke 1 wird nun in einer Fliesenpresse jeweils eine Schicht eines Tongranulates, das als Flußmittelzusatz 25 Gew.-% Glasmehl und 5 Gew.-% Basaltmehl enthält, aufgebracht und das Ganze dann bei etwa 300 N/cm$^2$ zu einer Rohverbundplatte verpreßt, die nun aus dem Trägerplattenstück 1, der Zwischenschicht 2 und einer an dieser haftenden kompakten Tonschicht 3 Einer Dicke von etwa 2,5 mm besteht.

Diese Rohverbundplatten werden nun, nachdem man sie gegebenenfalls auf der Tonschicht 3 noch mit einer Glasurschicht 4 versehen hat, in einem Brennofen ähnlich wie beim Brennen von keramischen Fliesen wärmebehandelt. Bei dieser Wärmebehandlung, bei welcher die Rohverbundplatten nach einer längeren Aufheizperiode während ca. 30 min auf einer Temperatur von ca. 1 000°C gehalten und die Platten danach langsam abgekühlt werden, erfolgt in den als Trägerplatten dienenden Vermiculitplatten eine Strukturumwandlung, welche sich in einer Erhöhung der Festigkeit und der Oberflächenhärte des Vermiculitplattenmaterials auswirkt, während die aufgebrachte Tonschicht 3 und die Glasur 4 wie bei einem üblichen Brennvorgang keramisieren.

Die bei der genannten Strukturumwandlung in eine Basisschicht 1' der Verbundplatte übergeführte Trägerplatte 1 bildet in der Verbundplatte die wärmeisolierende Schicht, während die gebrannte Tonschicht 3' eine mechanische Schutzschicht formt, welche eine größere Härte als die Trägerschicht 1' aufweist.

Bei der Herstellung der Vermiculitplatten kann auch vorteilhaft als Bindemittel neben Aluminiummonophosphat auch Natriummetaphosphat, z. B. mit jeweils einem Gewichtsanteil von 8 % atro am Gesamtgewicht des beleimten Granulats, eingesetzt werden.

Bei einer anderen Verfahrensvariante zur Herstellung einer erfindungsgemäßen Platte in Form einer Verbundplatte mit mechanischer Schutzschicht wird zunächst - analog wie anhand von Fig. 1 beschrieben - aus beleimtem Vermiculitgranulat durch Vorkomprimierung in kaltem Zustand ein Preßkuchen hergestellt. Auf diesen Preßkuchen wird dann ein Tongranulat - in derselben Zusammensetzung wie bei der vorstehend beschriebenen Verfahrensvariante - in gleichmäßiger Dicke aufgestreut und der so hergestellte Roh-Schichtverbund in einer mit einer Hochfrequenzkondensatorfeldbeheizung für das Preßgut ausgestatteten Presse bei einem Druck von 80 bis 100 N/cm$^2$ und einer Preßguttemperatur von 150 bis 170°G während einer Preßzeit von 8 bis 10 min zu einer Rohverbundplatte verpreßt. Diese Rohverbundplatte wird nun durch Sägeschnitte auf das gewünschte Maß in Plattenstücke unterteilt, die dann - gegebenenfalls nach Aufbringen einer Glasurschicht auf die Tonschicht - durch Wärmebehandlung in einem Brennofen in eine Verbundplatte übergeführt wird, die vorteilhaft als Bodenfliese verwendet werden kann.

Die erfindungsgemäße Platte kann auch ohne mechanische Schutzschicht realisiert werden. Fig. 2 zeigt in einer Teildarstellung im Schnitt eine solche Platte, die vorteilhaft als Verkleidungsplatte mit verminderter Schallreflexion in oder an Bauwerken zur Verkleidung von Decken oder Wänden verwendet werden kann.

Zur Herstellung einer solchen Verkleidungsplatte geht man z. B. von einer Vermiculitplatte einer Dicke von z. B. 20 mm aus, die analog wie die Trägerplatte 5 gemäß Fig. 1 hergestellt wird. In eine Oberfläche der Vermiculitplatte werden dann (siehe Fig. 2), zur Ausbildung einer reliefartigen Oberflächenstruktur, Nuten 6 eingefräst und die Vermiculitplatte anschließend in Plattenstücke 5 unterteilt, die nun - analog wie anhand von Fig. 1 beschrieben - bei ca. 1 000°C einer Wärmebehandlung unterzogen werden, bei welcher in dem Vermiculitmaterial die schon in der Beschreibung zu Fig. 1 erwähnte Strukturumwandlung eintritt und die Plattenstücke 5 in die gebrauchsfertigen Verkleidungsplatten 5' übergeführt werden.

Diese Verkleidungsplatte kann man auch glasiert oder mit einer oberflächigen Glasmehlfrittenschicht herstellen. Fig. 3 zeigt diese Variante in einer Teildarstellung in Schnitt. Dazu werden die genuteten Plattenstücke 5 glasiert und danach gebrannt, wobei bei diesem Brand die schon erwähnte Strukturumwandlung des Vermiculitmaterials stattfindet oder es kann die an sich schon fertige Platte 5' glasiert und einem nachträglichen Glasurbrand unterworfen werden.

Anstatt der üblichen keramischen Glasuren 4 kann man auch eine Glasmehlfrittenschicht aufbringen, die nach der Wärmebehandlung bzw. dem Glasurbrand glasklar wird oder - durch Pigmente eingefärbt - opak ist. Dabei können auch mehrere unterschiedliche Glasmehlfrittenschichten übereinander aufgebracht werden.

Weitere Varianten der Verkleidungsplatte sind in den Figuren 4 und 5 jeweils in Teildarstellungen im Schnitt gezeigt.

Bei der Variante gemäß Fig. 4 weist die mit einer Glasur 4 versehene Vermiculitplatte 7 an der Oberseite 8 eine unregelmäßig gewellte Oberflächenstruktur auf. Diese Oberflächenstruktur wird während des Herstellens der Vermiculitplatte 7 beim Verpressen und Aushärten der Vermiculitplatte durch entsprechende Formgebung der anliegenden Preßplatte erzielt.

Fig. 5 zeigt eine Variante einer Verkleidungsplatte, bei deren Herstellung man von einer Vermiculitplatte 9 mit einer relativ rauhen Oberfläche ausgeht, die an der Oberseite mit einer Glasmehlfrittenschicht 10 versehen wird. Nach der Wärmebehandlung bildet sich aus oberflächigem körnigen Vermiculitmaterial und dem Frittenmaterial eine Mischzone und es entsteht an der beschichteten Plattenseite 11 eine körnige, porige Oberflächenstruktur.

Das Verlegen der anhand der Figuren 2 bzw. 5 beschriebenen Verkleidungsplatten erfolgt vorzugsweise im Mörtelbett aber auch durch Klebung.

Die mit der mechanischen keramischen Schutzschicht versehene Platte kann vorteilhaft als Bodenfliese verwende werden. Platten ohne eine solche mechanische Schutzschicht können vorteilhaft als Verkleidungsplatten mit verminderter Schallreflexion in oder an Bauwerken zur Verkleidung von Decken und Wänden eingesetzt werden.

Patentansprüche

1. Platte aus anorganischem Material, die eine mechanisch tragende Basisschicht aufweist oder aus einer solchen besteht, welche Basisschicht ein aus einem Gemisch auf der Grundlage von exfoliiertem Vermiculit und Bindemittel verdichteter Körper ist, der gegebenenfalls an einer Seite der Basisschicht eine durch einen Brennvorgang hergestellte keramische Deckschicht aufweist, dadurch gekennzeichnet, daß die Basisschicht ein zum Zwecke einer Strukturumwandlung des Vermiculitgefüges bei Temperaturen von höher als 800°C, vorzugsweise von höher als 900°C länger als 3 min wärmebehandelter Körper ist.

2. Platte nach Anspruch 1, dadurch gekennzeichnet, daß das Material der Basisschicht (1') eine Dichte zwischen 700 und 1 400 kg/m$^3$ aufweist.

3. Platte nach Anspruch 1 oder 2, dadurch gekennzeichnet, daß der Bindemittelanteil in der Basisschicht (1') zwischen 5 und 20 Gew.-% beträgt.

4. Platte nach einem der Ansprüche 1 bis 3, dadurch gekennzeichnet, daß das Bindemittel eines auf Basis eines Aluminiummonophosphates und/oder anorganischen Polymerphosphates gegebenenfalls Alkalipolymerphosphates ist.

5. Platte nach einem der Ansprüche 1 bis 4, dadurch gekennzeichnet, daß die keramische Deckschicht an der Plattenoberfläche eine keramische Glasur (4) oder eine Glasmehlfrittenschicht ist oder aufweist.

6. Platte nach einem der Ansprüche 1 bis 5, dadurch gekennzeichnet, daß die Platte an zumindest einer Seite eine Oberflächenstruktur und/oder eine reliefartig ausgebildete Oberfläche aufweist.

7. Platte nach einem der Ansprüche 1 bis 6, dadurch gekennzeichnet, daß an zumindest einer Seite der Basisschicht (1') eine mechanische Schutzschicht (3') aus keramischem Material angeordnet ist.

8. Platte nach Anspruch 7, dadurch gekennzeichnet, daß die mechanische Schutzschicht (3') eine auf Basis von gebranntem Ton ist.

9. Platte nach Anspruch 7 oder 8, dadurch gekennzeichnet, daß zwischen der Basisschicht (1') und der mechanischen Schutzschicht (3') eine Zwischenschicht (2) auf Basis einer Glasmehlfritte angeordnet ist.

10. Platte nach einem der Ansprüche 7 bis 9, dadurch gekennzeichnet, daß die mechanische Schutzschicht (3') auf Basis von gebranntem Ton einen bei Brenntemperaturen von 900 bis 1 100°C wirksamen Flußmittelzusatz aufweist.

11. Platte nach Anspruch 10, dadurch gekennzeichnet, daß als Flußmittelzusatz in der keramischen mechanischen Schutzschicht (3') Glasmehl und gegebenenfalls Basaltmehl enthalten ist.

12. Platte nach Anspruch 10 oder 11, dadurch gekennzeichnet, daß der Glasmehlanteil in der keramischen mechanischen Schutzschicht (3') zwischen 3 und 35 Gew.-% und der Basaltmehlanteil zwischen 0 und 15 Gew.-% beträgt.

13. Platte nach einem der Ansprüche 7 bis 12, dadurch gekennzeichnet, daß auf der keramischen mechanischen Schutzschicht (3') eine oder mehrere keramische Glasurschichten (4) aufgebracht sind.

14. Verfahren zum Herstellen einer Platte aus anorganischem Material, bei dem zum Herstellen einer Basisschicht (1') ein mit einem Bindemittel versetztes, exfoliiertes Vermiculit-Granulat bei erhöhter Temperatur zu einer Schicht mit einem Raumgewicht von höher als 700 kg/m$^3$ verdichtet und verfestigt wird, wobei oder wonach gegebenenfalls auf zumindest eine der Plattenfrontflächen durch einen Brennvorgang eine keramische Schicht ausgebildet wird, dadurch gekennzeichnet, daß die Verdichtung auf ein Raumgewicht zwischen 700 und 1 500 kg/m$^3$ erfolgt und daß die verdichtete und gegebenenfalls verfestigte Schicht zum Zwecke einer Strukturumwandlung des Vermiculitgefüges bei Temperaturen von höher als 800°C, vorzugsweise von höher als 900°C länger als 3 min wärmebehandelt wird.

15. Verfahren nach Anspruch 14, dadurch gekennzeichnet, daß man zum Herstellen die Basisschicht (1') zunächst durch Verdichten und Härten des mit einem Bindemittel versetzten, exfoliierten Vermiculits Trägerplatten (1, 5, 7, 9) herstellt, die gegebenenfalls auf Dickenmaß geschliffen und/oder mit einer gegebenenfalls reliefartigen Oberflächenstruktur versehen sind bzw. werden, daß man gegebenenfalls diese Platten durch Unterteilung auf das vorgegebene Plattenformat bringt, und daß die Trägerplatte (1, 5, 7, 9) bei Temperaturen von höher als 800°C wärmebehandelt wird, wobei oder wonach auf zumindest einer der Plattenfrontflächen gegebenenfalls eine keramische Schicht ausgebildet wird.

16. Verfahren nach Anspruch 15, dadurch gekennzeichnet, daß auf zumindest eine der Frontseiten der Trägerplatte (1) eine Zwischenschicht (2) in Form einer Glasmehlfritte und auf diese eine Flußmittel und/oder gegebenenfalls andere Additive enthaltende Tonschicht (3) aufgebracht werden und daß die so erzeugte Rohverbundplatte bei Temperaturen von höher als 800°C, insbesondere von höher als 900°C wärmebehandelt wird.

17. Verfahren nach Anspruch 16, dadurch gekennzeichnet, daß die Tonschicht (3) einer Dicke im Bereich zwischen 1,5 und 4,0 mm in Form einer Tongranulatschicht aufgebracht und mit der Trägerplatte oder der Zwischenschicht durch Aufpressen bei Drücken zwischen 200 und 500 N/cm$^2$ verbunden wird.

18. Verfahren nach Anspruch 14, dadurch gekennzeichnet, daß zwecks Vorbereitung der Ausbildung der keramischen mechanischen Schutzschicht auf eine vorgepreßte Schicht des mit dem Bindemittel versetzten Granulats aus exfoliiertem Vermiculit, welche später die Basisschicht (1') bildet, eine gegebenenfalls Flußmittel und/oder andere Additive enthaltende Tonschicht aufgebracht wird, daß dieser Roh-Schichtverbund danach unter Härtung des Basisschicht-Bindemittels heiß verpreßt wird, daß die so erzeugte Rohverbundplatte gegebenenfalls durch Unterteilung auf das vorgegebene Plattenformat gebracht und daß sie schließlich bei Temperaturen höher als 800°C wärmebehandelt wird.

19. Verfahren nach Anspruch 18, dadurch gekennzeichnet, daß die Tonschicht in Form einer Tongranulatschicht aufgebracht wird, die beim nachfolgenden Heißverpressen des Roh-Schichtverbundes in eine weitgehend kompakte Tonschicht übergeführt wird.

20. Verfahren nach einem der Ansprüche 14 bis 19, dadurch gekennzeichnet, daß die Trägerplatte (5, 7, 9), die mit der Zwischenschicht (2) und der Tonschicht (3) verbundene Trägerplatte (1) oder die Rohverbundplatte glasiert oder oberflächig mit einer Glasmehlfrittenschicht versehen und bei Temperaturen höher als 800°C gebrannt oder bei Temperaturen höher als 800°C wärmebehandelt, nachträglich glasiert oder oberflächig mit einer Glasmehlfrittenschicht versehen und noch einem Glasurbrand unterworfen werden.

21. Verwendung einer Platte nach einem der Ansprüche 1 bis 13, oder einer Platte, hergestellt nach einem Verfahren gemäß einem der Ansprüche 14 bis 20, dadurch gekennzeichnet, daß sie als Verkleidungsplatte mit verminderter Schallreflexion in oder an Bauwerken zur Verkleidung von Decken oder Wänden verwendet wird.

**Claims**

1. Plate of inorganic material, which has a load bearing base layer or consists of such a layer, which base layer is a compressed body of a mixture basing on exfoliated vermiculite and binder, which optionally has on one side of the base layer a ceramic covering layer produced by a burning process, characterised in that the base layer is a body which has been heat-treated at temperatures of higher than 800°C., preferably of higher than 900° for longer than 3 minutes for the purpose of a structural change of the vermiculite texture.

2. Plate according to Claim 1, characterised in that the material of the base layer (1') has a density between 700 and 1 400 kg/m$^3$.

3. Plate according to Claim 1 or 2, characterised in that the proportion of binder in the base layer (1') is between 5 and 20 % by weight.

4. Plate according to one of Claims 1 to 3, characterised in that the binder is one based on an aluminium monophosphate and/or inorganic polymeric phosphates, optionally alkali polymeric phosphates.

5. Plate according to one of Claims 1 to 4, characterised in that the ceramic covering layer on the plate surface is or comprises a ceramic enamel (4) or a glass powder frit.

6. Plate according to one of Claims 1 to 5, characterised in that the plate has on at least one side a surface structure and/or a surface formed in a relief-like manner.

7. Plate according to one of Claims 1 to 6, characterised in that on at least one side of the base layer (1') a mechanically protective layer (3') of ceramic material is provided.

8. Plate according to Claim 7, characterised in that the mechanically protective layer (3') is based on burnt clay.

9. Plate according to Claim 7 or 8, characterised in that an intermediate layer (2) based on glass powder frit is provided between the base layer (1') and the mechanically protective layer (3').

10. Plate according to one of Claims 7 to 9, characterised in that the mechanically protective layer (3') is based on burnt clay with an additive of a flux effective at a burning temperature of 900 to 1 100°C.

11. Plate according to Claim 10, characterised in that glass powder and optionally basalt powder is contained as flux additive in the mechanically protective layer (3').

12. Plate according to Claim 10 or 11, characterised in that the amount of glass powder in the ceramic mechanically protective layer (3') is between 3 and 35 % by weight and of basalt powder between 0 and 15 % by weight.

13. Plate according to one of Claims 7 to 12, characterised in that one or more ceramic enamel layers (4) are applied to the ceramic mechanically protective layer (3').

14. Process for the production of a plate of inorganic material, in which for the production of a base layer (1') an exfoliated vermiculite granulate mixed with a binder is compressed and consolidated at elevated temperature to a layer with a bulk density of higher than 700 kg/m$^3$, during which or thereafter a ceramic layer is formed by a burning process on at least one of the front faces of the plate, characterised in that the compression to a bulk density between 700 and 1 500 kg/m$^3$ takes place and that the compressed and optionally consolidated layer is heat-treated at temperatures of higher than 800°C., preferably of higher than 900°C., for longer than 3 minutes for the purpose of a structural change of the vermiculite texture.

15. Process according to Claim 14, characterised in that for the production of the base layer (1'), there are first produced by compressing and hardening the exfoliated vermiculite mixed with a binder support plates (1, 5, 7, 9), which are optionally ground to a standard thickness and/or provided with an optionally relief-like surface structure, that optionally these plates are divided into the predetermined plate format, and that the support plate (1, 5, 7, 9) is heat-treated at temperatures of higher than 800°C, during which or thereafter an optionally ceramic layer is formed on at least one of the front faces of the plate.

16. Process according to Claim 15, characterised in that to at least one of the front sides of the support plate (1) there is applied an intermediate layer (2) in the form of a glass powder frit and on this a layer of clay containing a flux and/or optionally other additives, and that the resulting raw laminated plate is heat-treated at temperatures of higher than 800°C especially of higher than 900°C.

17. Process according to Claim 16, characterised in that the clay layer (3) is applied in the form of a granular clay layer of a thickness in the range between 1.5 and 4.0 mm and laminated with the support plate or the intermediate layer by pressing at a pressure between 200 and 500 N/cm².

18. Process according to Claim 14, characterised in that for the purpose of preparing the formation of the ceramic mechanically protective layer, a clay layer optionally containing flux and/or other additives is applied onto a prepressed layer of the granulate of exfoliated vermiculite mixed with the binder which layer later on forms the base layer (1'), that this raw composite structure is hotpressed while hardening the binder of the base layer, that the resulting raw composite plate is brought optionally by dividing into the predetermined plate format and that it is finally heat-treated at temperatures higher than 800°C.

19. Process according to Claim 18, characterised in that the clay layer is applied in the form of a granular clay layer, and is converted into a substantially compact clay layer by subsequent hot-pressing of the raw composite structure.

20. Process according to one of Claims 14 to 19, characterised in that the support plate (5, 7, 9), the support plate (1) with the intermediate layer (2) and the clay layer (3) or the raw composite plate is enamelled or provided on its surface with a glass powder frit layer and burnt at temperatures higher than 800°C or heat-treated at temperatures higher than 800°C, additionally enamelled or provided on its surface with a glass power frit layer and subjected to glaze baking.

21. Use of a plate according to one of Claims 1 to 13, or a plate produced by a process according to one of Claims 14 to 20, characterised in that it is used as a cladding plate with reduced sound reflection in or on buildings for the cladding of roofs or walls.

**Revendications**

1. Plaque en matière minérale comportant une couche de base mécaniquement porteuse ou constituée d'une telle couche de base, cette couche de base consistant en un corps comprimé obtenu à partir d'un mélange de vermiculite exfoliée et de liant, comportant, le cas échéant, d'un côté de la couche de base, une couche de revêtement céramique préparée par un processus de cuisson, cette plaque étant caractérisée en ce que cette couche de base est constituée d'un corps qui, en vue d'une modification de structure de la vermiculite, est soumis à un traitement à la chaleur à des températures supérieures à 800°C, de préférence supérieures à 900°C, pendant une durée supérieure à 3 minutes.

2. Plaque selon la revendication 1, caractérisée en ce que la matière de la couche de base (1') présente une densité comprise entre 700 et 1 400 kg/m³.

3. Plaque selon la revendication 1 ou 2, caractérisée en ce que la proportion de liant dans la couche de base (1') est comprise entre 5 et 20 % en poids.

4. Plaque selon l'une quelconque des revendications 1 à 3, caractérisée en ce que le liant est un liant à base d'un monophosphate d'aluminium et/ou d'un phosphate polymère minéral, le cas échéant d'un phosphate polymère alcalin.

5. Plaque selon l'une quelconque des revendications 1 à 4, caractérisée en ce que la couche de revêtement céramique appliquée sur la surface de la plaque est une glaçure céramique (4) ou une couche de poudre de verre fritté.

6. Plaque selon l'une quelconque des revendications 1 à 5, caractérisée en ce que, au moins d'un côté, la plaque présente une structure superficielle et/ou une surface en relief.

7. Plaque selon l'une quelconque des revendications 1 à 6, caractérisée en ce que, au moins d'un côté de la couche de base (1'), est appliquée une couche (3') de protection mécanique en céramique.

8. Plaque selon la revendication 7, caractérisée en ce que la couche de protection mécanique (3') est une couche à base d'argile cuite.

9. Plaque selon la revendication 7 ou 8, caractérisée en ce que, entre la couche de base (1') et la couche (3') de protection mécanique, on intercale une couche intermédiaire (2) à base de poudre de verre fritté.

10. Plaque selon l'une quelconque des revendications 7 à 9, caractérisée en ce que la couche de protection mécanique (3') à base d'argile cuite comporte un additif fondant efficace à des températures de cuisson comprises entre 900 et 1 100°C.

11. Plaque selon la revendication 10, caractérisée en ce qu'elle contient comme fondant dans la couche de protection mécanique céramique (3') de la poudre de verre et éventuellement de la poudre de basalte.

12. Plaque selon la revendication 9 ou 10, caractérisée en ce que la proportion de poudre de verre dans la couche de protection mécanique céramique (3') atteint entre 3 et 35 % en poids et la proportion de poudre de basalte atteint entre 0 et 15 % en poids.

13. Plaque selon l'une quelconque des revendications 7 à 12, caractérisée en ce que, à la couche de protection mécanique en céramique (3'), on superpose une ou plusieurs couches (4) de glaçure céramique.

14. Procédé de fabrication d'une plaque en matière minérale dans laquelle, pour la réalisation d'une couche de base (1'), un granulat de vermiculite exfoliée traité à l'aide d'un liant est comprimé et solidifié à température élevée pour former une couche d'une densité apparente supérieure à 700 kg/m³, une couche de céramique étant simultanément ou ultérieurement appliquée par un processus de cuisson sur au moins une des faces de la plaque, ce procédé étant caractérisé en ce que la compression se fait à une densité apparente comprise entre 700 et 1 500 kg/m³ et que la couche comprimée et éventuellement solidifiée, en vue d'une modification de la structure de la vermiculite, est traitée à la chaleur à des températures supérieures à 800°C, de préférence supérieures à 900°C, pendant une durée supérieure à 3 minutes.

15. Procédé selon la revendication 14, caractérisé en ce que, pour la réalisation de la couche de base (1'), on prépare tout d'abord par compression et durcissement des plaques porteuses de la vermiculite exfoliée (1, 5, 7, 9) additionnée d'un liant, ces plaques étant le cas échéant réduites par abrasion à l'épaisseur convenable et/ou présentant ou destinées à recevoir le cas échéant une structure superficielle en relief, en ce que le cas échéant on amène ces plaques par subdivision au format de plaque prescrit et, fait subir aux plaques porteuses (1, 5, 7, 9) un traitement thermique à des températures supérieures à 800°C, et simultanément ou ultérieurement, le cas échéant on forme au moins sur l'une des faces des plaques une couche de céramique.

16. Procédé selon la revendication 15, caractérisé en ce que, au moins sur une des faces de la couche porteuse (1), on applique une couche intermédiaire (2) sous la forme de poudre de verre fritté et sur celle-ci on applique une couche d'argile (3) contenant un fondant et/ou le cas échéant d'autres additifs et la plaque composite brute ainsi fabriquée est soumise à un traitement à la chaleur à des températures supérieures à 800°C, notamment supérieures à 900°C.

17. Procédé selon la revendication 16, caractérisé en ce que la couche d'argile (3) est appliquée à une épaisseur comprise entre 1,5 et 4,0 mm sous la forme d'une couche de granulés d'argile et elle est liée à la plaque porteuse ou à la couche intermédiaire par pressage à des pressions comprises entre 200 et 500 N/cm².

18. Procédé selon la revendication 14, caractérisé en ce que, en prologue de la formation de la couche de céramique mécaniquement protectrice, on applique, sur une couche précomprimée du granulat de vermiculite exfoliée traitée par un liant destiné à former ultérieurement la couche de base (1'), une couche d'argile contenant le cas échéant, un fondant et/ou d'autres additifs, que cette couche de composite brut est ensuite comprimée à chaud avec durcissement du mélange couche de base/liant, que la plaque brute ainsi préparée et, le cas échéant, subdivisée en carreaux de format convenable est finalement traitée à des températures supérieures à 800°C.

19. Procédé selon la revendication 18, caractérisé en ce que la couche d'argile est appliquée sous la forme d'une couche de granulés d'argile qui, par pressage à chaud ultérieur de la couche composite d'argile brut, est transformée en une couche d'argile sensiblement compacte.

20. Procédé selon l'une quelconque des revendications 14 à 19, caractérisé en ce que la plaque porteuse (5, 7, 9), la plaque porteuse (1) associée à la couche intermédiaire (2) et à la couche d'argile (3) ou la plaque composite brute, reçoivent une glaçure ou une couche de poudre de verre fritté superficielle et sont cuites à des températures supérieures à 800°C ou sont traitées à la chaleur à des températures supérieures à 800°C, sont ensuite pourvues d'une glaçure ou revêtues en surface d'une couche de verre fritté et encore soumises à une autre cuisson d'application d'une glaçure.

21. Utilisation d'une plaque selon l'une quelconque des revendications 1 à 13 ou d'une plaque préparée par un procédé selon l'une quelconque des revendications 14 à 20, caractérisée en ce qu'on les utilise comme plaques de revêtement pour le revêtement de plafond ou de paroi aux fins d'atténuer la réflexion du son à l'intérieur ou à l'extérieur du batiment.

**Fig. 1**

**Fig. 2**

**Fig. 3**

**Fig. 4**

**Fig. 5**